# EUROPEAN PATENT APPLICATION

(11) **EP 1 005 054 A2**
(43) Date of publication of application: **31.05.2000**
(21) Application number: 99309486.1
(22) Date of filing: 26.11.1999
(51) Int. Cl.: H01H 3/12, H01H 13/70

(54) **Thin keyboard**

(30) Priority: 26.11.1998 JP 33510898
(71) Applicant: ALPS ELECTRIC CO., LTD., Ota-ku Tokyo 145 (JP)
(72) Inventor: Suga, Seiichi, Iwaki-shi, Fukushima-ken (JP); Yokoyama, Kazuhiro, Iwaki-shi (JP); Watanabe, Kazutoshi, Iwaki-shi, Fukushima-ken (JP); Narusawa, Tsuyoshi, Iwaki-shi, Fukushima-ken (JP); Hirano, Shinji, Iwaki-shi, Fukushima-ken (JP); Katayama, Katsuyuki, Iwaki-shi, Fukushima-ken (JP)
(74) Representative: Kensett, John Hinton

(57) **Abstract**

The present invention provides a keyboard constructed so that a radio of a dimension between a first latching portion (4a) of a first lever (4) and a pivotally supporting portion thereof to a dimension between this pivotally supporting portion thereof and a second latching portion (4b) thereof is equal to a ratio of a dimension between a first latching portion (5a) of a second lever (5) and another pivotally supporting portion thereof to a dimension between this pivotally supporting portion thereof and a second latching portion (5b) thereof. Thus, when the key top descends, the second latching portions of the first and second levers are placed outside the first latching portions of the first and second levers. Consequently, reduction in thickness of a keyboard is achieved.

## Description

The present invention relates to a keyboard, which is used as and suited to an input device for word processors, personal computers and the like.

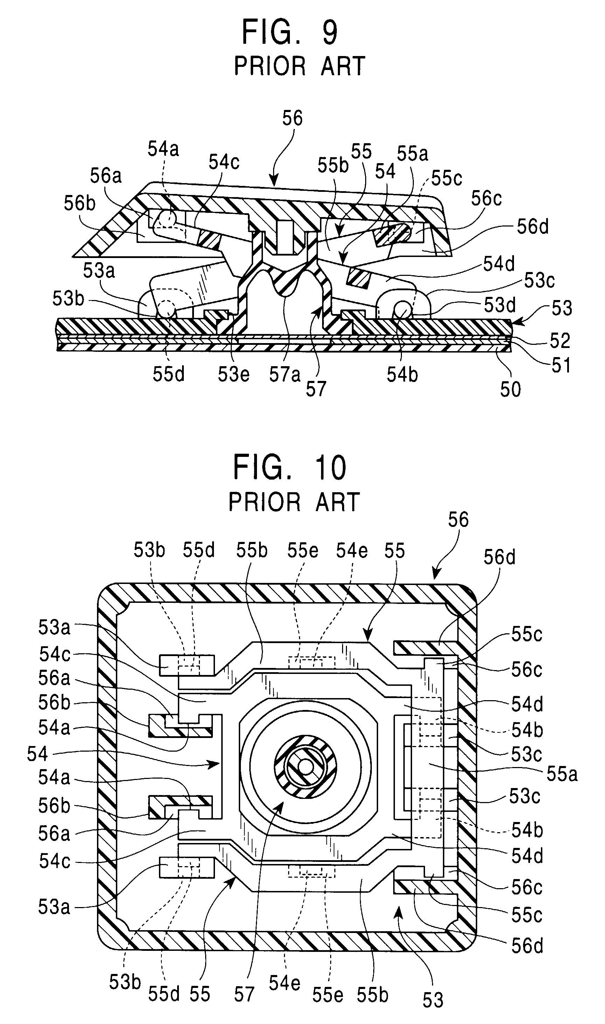

A conventional keyboard used as such a kind of an input device has membrane switches that are placed on a support plate (not shown) made of metal. As illustrated in FIGS. 9 and 10, each of the membrane switches comprises a lower sheet 50, which has a stationary contact (not shown), and a flexible upper sheet 52 that has a movable contact (not shown) and that is arranged on this lower sheet 50 through an insulating spacer 51.

A support member 53 made of a resin material is arranged on each of the membrane switches. As viewed in each of these figures, two engaging portions 53a each having an engaging hole 53b are formed on the left-side portion of this support member 53, while two engaging portions 53c each having an engaging hole 53d are formed on the right-side portion thereof.

An opening 53e is formed among the left-side engaging portions 53a and the right-side engaging portions 53c.

Further, a first lever 54 made of a resin material has a pair of arm portions 54c and 54d each having cylindrical convex portions 54a and 54b respectively provided at both ends thereof. Moreover, a pivotally supporting portion 54e projecting outwardly is formed at the central portion of each of the arm portions 54c and 54d. Furthermore, each of the convex portions 54b is rotatably engaged with a corresponding one of the engaging portions 53d of the support member 53.

A second lever 55 made of a resin material is disposed outside the first lever 54. As viewed in FIG. 10, this second lever 55 comprises a connecting portion 55a provided at the right-side portion thereof, and a pair of arm portions 55b, which extend leftwardly upwardly and downwardly from the top and bottom portion of this connecting portion 55a, respectively. The second lever 55 is nearly U-shaped.

Cylindrical convex portions 55c are formed at both end portions of the connecting portion 55a, respectively, in such a manner as to protrude outwardly therefrom. A cylindrical convex portion 55d is formed at the left-side end portion of each of the pair of arm portions 55b in such a way as to project outwardly therefrom. A nearly elliptic recess portion 55e is formed at the central portion of each of the pair of arm portions 55b. Furthermore, each of the convex portions 55d is rotatably engaged with a corresponding one of the engaging portions 53a of the support member 53. Additionally, each of the pivotally supporting portions 54e of the first lever 54 is fitted into the corresponding recess portion 55e, so that the first and second levers 54 and 55 are combined with each other in such a manner as to intersect each other.

Further, a pair of holding portions 56b each having a sliding groove formed in such a way as to be outwardly opened are provided on the left-side portion of the back surface of a key top 56 made of a resin material, as viewed in these figures, in such a way as to face each other. Moreover, a pair of holding portions 56d each having a sliding groove formed in such a way as to be inwardly opened are provided on the right-side portion of the back surface of the key top 56, as viewed in these figures, in such a way as to face each other.

As viewed in these figures, each of the protrusions 54a of the first lever 54 is slidably held in a corresponding one of the left-side holding portions 56b, while each of the protrusions 55c of the first lever 55 is slidably held in a corresponding one of the right-side holding portions 56d. Thus, the key top 56 is mounted on the first and second levers 54 and 55 in such a manner as to freely move up and down.

Furthermore, a dome-like elastic element 57 made of insulating rubber is put on the membrane switch by being placed in the opening 64e of the support member 53. The top end portion of the elastic element 57 abuts against the back surface of the key top 56.

The conventional keyboard is constituted by placing a plurality of sets of the first and second levers 54 and 55, the key top 56 mounted on these levers 54 and 55, and the elastic element 57 on the membrane switch in a plurality of lines.

Further, when the key top 56 is pushed, first, the convex portions 54b and 55d of the first and second levers 54 and 55 respectively rotate around the engaging portions 53c and 53a, each of which is used as a fulcrum, of the support member 53. Moreover, the pivotally supporting portion 54e of each of the first levers 54 moves in a corresponding one of the nearly elliptic recess portions 55e. Furthermore, while the convex portions 54a and 55c slide in the sliding grooves 56b and 56d provided at the side of the key top 56, respectively, the first and second levers 54 and 55 move down, so that the key top 56 descends.

This descent of the key top 56 results in the elastic element 57 being pushed. When the dome-like elastic element 57 is dented or reversed, a switch substrate 52 is pressed by a projection 57a provided in the elastic element 57. Thus, a circuit contact provided on the switch substrate 52 touches an electric conductor provided on an insulating substrate 50. Consequently, the membrane switch is turned on.

Subsequently, when the pressing of the key top 56 is stopped, the resilient force of the elastic element 57 causes the first and second levers 54 and 55 and the key top 56 to return to the positions taken by these elements before the key top 56 is pressed. Moreover, the switch substrate 52 pushed by the elastic element 57 returns to an initial state thereof by a restoring force thereof. Thus, the engagement between the switch substrate 52 and the insulating substrate 50 is canceled. Consequently, the membrane switch is brought into an off-state.

However, in the case of the conventional keyboard, when the key top 56 descends, the connecting portion 55a of the second lever 55 is placed on the right-side arm portion 54d of the first lever 55, as viewed in these figures. Thus, the first and second levers 54 and 55 overlap each other. Consequently, each of the first and second levers 54 and 55 cannot be put into a completely horizontal position. Therefore, the conventional keyboard has a problem in the reduction in thickness thereof.

Further, ascending and descending operations of the key top 56 are unstable because of the facts that the first and second levers 54 and 55 are rotatably engaged with the engaging portions 53a and 53c, respectively, and that the pivotally supporting portions 54e each serving as a fulcrum of the first and second levers 54 and 55 moves by sliding in the recess portion 55e. Thus, the conventional keyboard has another problem in the operability of the key top 56.

Accordingly, an object of the present invention is to provide a keyboard, which has a structure preventing the first and second levers 54 and 55 from overlapping each other even when the key top 56 descends, and which can be reduced in thickness and which excels in operability thereof.

To achieve the foregoing object, according to the present invention, there is provided a keyboard which comprises a key top held on a base plate in such a way as to freely ascend and descend, an elastic member for upwardly pressing the key top, and first and second levers for holding the key top so that the key top freely ascends and descends. In this keyboard, the first and second levers are combined with each other by pivotally supporting members, each of which is formed between first and second ends of a corresponding one of the first and second levers, in such a way as to intersect each other. The first lever has a first latching portion for catching the first end thereof on the base plate, and a second latching portion for catching the second end thereof on the key top. The second lever has a first latching portion for catching the second end thereof on the base plate, and a second latching portion for catching the first end thereof on the key top. The first catching portions of the first and second levers are caught on the base plate, and the second latching portions of the first and second levers are caught on the key top, so that the ratio of the dimension from the first latching portion of the first lever to the pivotally supporting member thereof to the dimension from the pivotally supporting member thereof to the second latching portion thereof is equal to the ratio of the dimension from the first latching portion of the second lever to the pivotally supporting member thereof to the dimension from the pivotally supporting member thereof to the second latching portion thereof. The second latching portions of the first and second levers are placed outside the first latching portions of said first and second levers when the key top descends.

Thus, each of the second latching portions of the first and second levers can be prevented from overlapping with a corresponding one of the first latching portions thereof when the key top descends. Moreover, the first and second levers can be rotated until each of these levers is in a nearly horizontal position.

Consequently, the height or dimension from the base plate to the key top can be reduced. Thus, a thin keyboard can be provided.

Preferably, the first latching portion provided at the first end of the first lever is rotatably caught on the base plate. The second latching portion provided at the first end of the second lever is rotatably caught on the key top. The second latching portion provided at the second end of the first lever is slidably caught on the key top. The first latching portion provided at the second end of the second lever is slidably caught on the base plate. The pivotally supporting members of the first and second levers are rotatably combined with each other.

Thus, the first and second levers can be moved smoothly upwardly and downwardly by using the combined rotatable pivotally supporting portions as a fulcrum. Moreover, the key top, which is in the nearly horizontal position, can smoothly ascend and descend. Consequently, the present invention can provide a keyboard having good operability.

Preferably , each of the first and second latching portions of the first and second levers is formed like a rod in such a way as to protrude therefrom. Further, a section of each of the first and second latching portions thereof has a nearly elliptic shape, whose dimension in an up-and-down direction is larger than a lateral dimension thereof.

Thus, the height or dimension from the base plate to the key top at the time of descending the key top can be reduced still more.

Other features, objects and advantages of the present invention will become apparent from the following description of a preferred embodiment with reference to the drawings in which like reference characters designate like or corresponding parts throughout several views, and in which:
FIG. 1 is a plan view of a keyboard according to the present invention;
FIG. 2 is a sectional side view of a primary portion of the keyswitch according to the present invention;
FIG. 3 is a sectional plan view of the primary portion of the keyswitch according to the present invention;
FIG. 4 is a partial side view of a base plate according to the present invention;
FIGS. 5A and 5B are plan and side views of a first lever according to the present invention, respectively;
FIGS. 6A and 6B are plan and side views of a second lever according to the present invention, respectively;
FIG. 7 is a sectional view of a primary portion of a key top according to the present invention;
FIG. 8 is a bottom view of the key top according to the present invention;
FIG. 9 is a sectional side view of a keyswitch of a conventional keyboard; and
FIG. 10 is a sectional plan view of the keyswitch of the conventional keyboard.

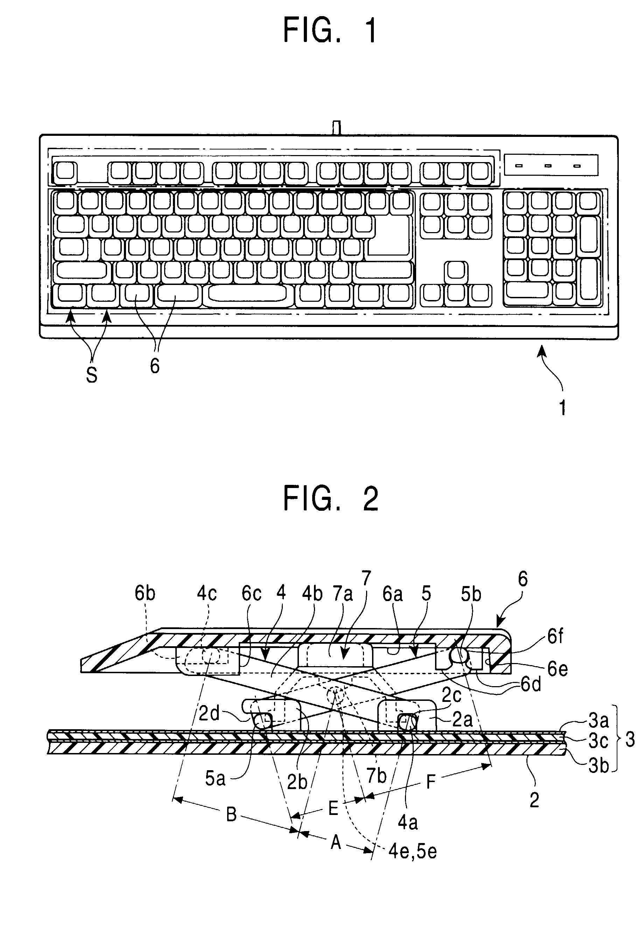

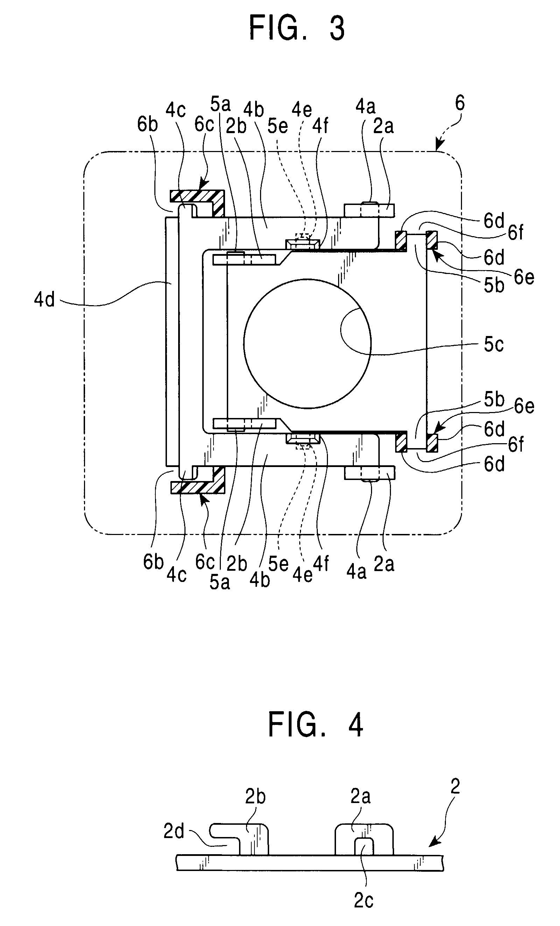

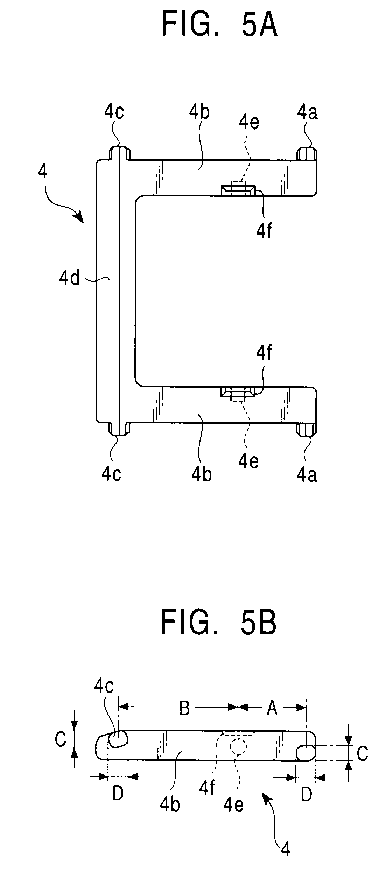

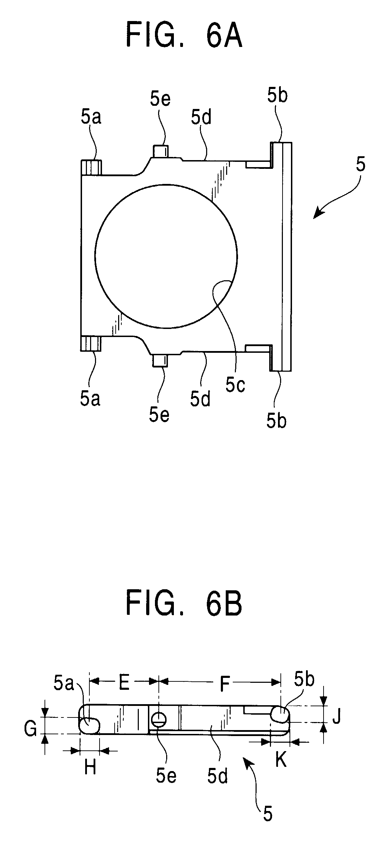

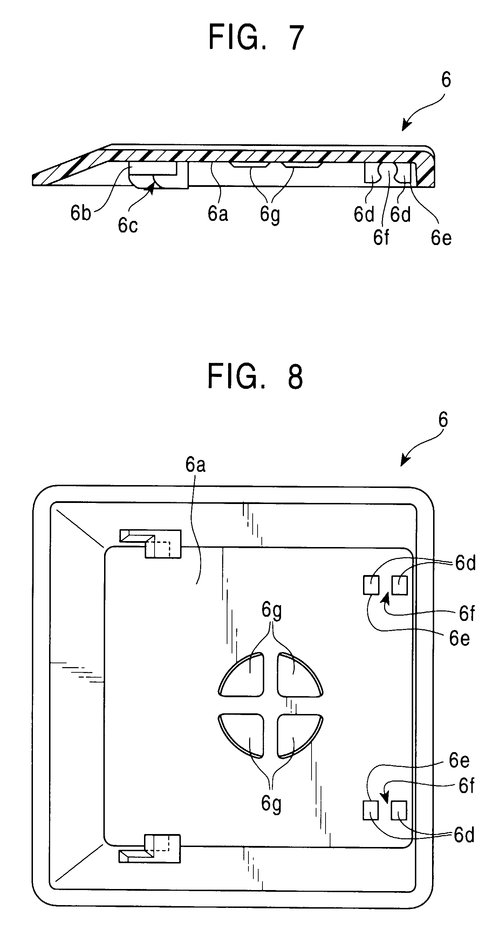

Hereinafter, the preferred embodiment of the present invention will be described in detail by referring to the accompanying drawings. FIG. 1 is a plan view of a keyswitch according to the present invention. FIG. 2 is a sectional side view of a primary portion of the keyswitch according to the present invention. FIG. 3 is a sectional plan view of the primary portion of the keyswitch according to the present invention. FIG. 4 is a partial side view of a base plate according to the present invention. FIGS. 5A and 5B are plan and side views of a first lever according to the present invention, respectively. FIGS. 6A and 6B are plan and side views of a second lever according to the present invention, respectively. FIG. 7 is a sectional view of a primary portion of a key top according to the present invention. FIG. 8 is a bottom view of the key top according to the present invention.

Referring first to FIG. 1, there is shown a keyboard of the present invention, in which plural keyswitches S are arranged in a casing 1. As shown in FIG. 2, a base plate 2 made of metal, such as aluminum, is disposed in the lower portion of the keyswitch S.

This base plate 2 has a first engaging portion 2a and a second engaging portion 2b, which are cut and raised by stamping, as shown in FIG. 4. The first engaging portion 2a is formed like a gate having a rectangular hole 2c. The second engaging portion 2b has a sliding groove 2d, whose one side is opened, and is L-shaped.

As illustrated in FIG. 3, the engaging portions 2a and 2b are formed so that a pair of the first engaging portions 2a face each other and that a pair of the second engaging portions 2b face each other.

A membrane switch 3 is put on the base plate 2. This membrane switch 3 is constructed by causing a movable contact (not shown), which is provided on the bottom surface of a flexible upper sheet 3a, to face a stationary contact (not shown) provided on the top surface of a lower sheet 3b and by causing a spacer 3c to intervene between the sheets 3a and 3b.

A hole (not shown), through which the first and second engaging portions 2a and 2b cut and raised from the base plate 2 can penetrate, is bored in each of the upper sheet 3a, the lower sheet 3b and the spacer 3c of the membrane switch 3. The first and second engaging portions 2a and 2b are inserted into this hole, so that the positioning of the membrane switch 3 is performed. Thus, the membrane switch 3 is placed on the base plate 2.

The first and second levers 4 and 5 are disposed on the membrane switch 3 positioned and placed on the base plate 2. Further, the first lever 4 rotatably engaged with the first engaging portion 2a is made of a resin material. As viewed in FIG. 5A, arm portions 4b and 4b respectively having first rod-like latching portions 4a and 4a projected upwardly and downwardly from the right-side ends thereof are formed in such a way as to face each other in the up-and-down direction.

Furthermore, the first lever 4 has a connecting portion 4d, which is provided at the left-side end, as viewed in this figure, and which connects the upper and lower arm portions 4b and 4b. Moreover, the rod-like second latching portions 4c and 4c are formed at the top and bottom ends of this connecting portion 4d in such a manner as to project therefrom. Further, the first lever 4 is opened at the right side thereof, as viewed in this figure. Thus, the first lever 4 is formed in such a way as to have a nearly U-shaped outward form.

As shown in FIG. 5B, each of the first and second latching portions 4a ad 4b is formed in such a way as to have a nearly elliptic section, whose dimension C in the up-and-down direction is larger than the lateral dimension D.

Such a first lever 4 is formed so that each of the first latching portions 4a is rotatably caught in the rectangular hole 2c of the first engaging portion 2a.

Each of circular-hole-like pivotally supporting portions 4e and 4e is formed to the corresponding first latching portion 4a provided on the inner surface of a corresponding one of the arm portions 4b and 4b, which face each other, in such a manner as to have a predetermined depth and a predetermined diameter. Further, guide portions 4f and 4f are formed by chamfering off the corner portions on these pivotally supporting portions 4e and 4e.

The first lever 4 is formed so that a part extending from the first latching portion 4a to the pivotally supporting portion 4e has the dimension A and that another part extending from the pivotally supporting portion 4e to the second latching portion 4c has the dimension B.

The second lever 5 slidably caught on the second engaging portion 2b of the base plate 2 is made of a resin material. Further, the second lever 5 is formed in such a way as to have a nearly rectangular outside shape, as illustrated in FIG. 6A. First rod-like latching portions 5a and 5a are respectively formed at the top and bottom ends of the left side of the second lever 5, as viewed in this figure, in such a manner as to protrude therefrom. Second rod-like latching portions 5b and 5b are respectively formed at the top and bottom ends of the right side of the second lever 5, as viewed in this figure, in such a way as to project therefrom.

As illustrated in FIG. 6B, the first latching portion 5a is formed in such a manner as to have a nearly elliptic shape, whose lateral dimension H is larger than the dimension in the up-and-down direction G. Moreover, the second latching portion 5b is formed in such a way as to have a nearly elliptic shape, whose lateral dimension K is larger than the dimension in the up-and-down direction J.

Further, the first latching portion 5a is slidably caught in the sliding groove 2d of the second engaging portion 2b of the base plate 2. A circular hole 5c for allowing an elastic member 7 (to be described later) to penetrate therethrough is formed to the left side of the surface of the second lever 5, as viewed in this figure.

Moreover, cylindrical pivotally supporting portions 5e and 5e are formed on the upper and lower side surfaces 5d and 5d of the second lever 5 to the first latching portions 5a in such a way as to have a predetermined dimension and to protrude therefrom.

The second lever 5 is formed so that a part extending from the first latching portion 5a to the pivotally supporting portion 5e has the dimension E and that another part extending from the pivotally supporting portion 5e to the second latching portion 5b has the dimension F.

Furthermore, the pivotally supporting portion 5d of the second lever 5 is fitted into the circular-hole-like pivotally supporting portion 4e of the first lever 4, so that the first and second levers 4 and 5 are combined with each other in such a way as to intersect each other, as shown in FIG. 2. Additionally, each of the first latching portions 4a of the first lever 4 is rotatably caught in the corresponding first engaging portion 2a of the base plate 2. Each of the first latching portions 5a of the second lever 5 is slidably caught in the corresponding second engaging portion 2b of the base plate 2. Thus, the second latching portions 4c and 5b of the first and second levers 4 and 5 can move upwardly and downwardly.

The key top 6 held by the first and second levers 4 and 5 is made of a resin material. As viewed in FIGS. 7 and 8, a pair of first engaging portions 6c are formed on the left-side portion of the back surface 6a of the key top 6. Sliding grooves 6b are formed in these first engaging portions 6c in such a way as to inwardly face each other.

Moreover, a pair of second engaging portions 6e having engaging walls 6d and 6d formed in such a manner as to laterally face each other and project therefrom, as shown in FIG. 7, are formed on the right-side portion of the rear surface 6a of the key top 6, as viewed in this figure. Engaging grooves 6f each having nearly circular sections are formed in the side portion, in which the engaging walls 6d and 6d face each other, of the second engaging portions 6e. Each of the engaging grooves 6f is opened downwardly, as viewed in this figure, so that this opening has a predetermined width.

Further, as shown in FIG. 8, a circular cap-positioning portion 6g is formed in the nearly central portion of the back surface 6a in such a manner as to be partitioned into 4 sub-portions arranged in a cross-like manner and to project therefrom.

Furthermore, the first latching portion 4a provided on one end of the first lever 4 is rotatably caught on the base plate 2, while the second latching portion 5a provided on the corresponding one end of the second lever 5 is rotatably caught on the key top 6. Further, the first latching portion 4a provided on the other end of the first lever 4 is slidably caught on the key top 6, while the second latching portion 5a provided on the corresponding other end of the second lever 5 is slidably caught on the base plate 2. The pivotally supporting portions 4e and 5e of the first and second levers 4 and 5 are rotatably caught on the key top 6. Thus, the key top 6 is held by the first and second levers 4 and 5 in such a manner as to freely move upwardly and downwardly while the key top 6 is in a nearly horizontal position.

The elastic element 7 for upwardly and elastically pushing the key top 6 is put on and attached to the membrane switch 3 provided between the first and second engaging portions 2a and 2b on the base plate 2 by using a bonding agent. The elastic element 7 is constituted by an insulating rubber cap, and contains a dome-like cavity 7a in which a convex portion 7b projecting downwardly is formed. The top end portion 7c of the elastic element 7 is positioned at the cap-positioning portion 6g provided on the back surface 6a of the key top 6. The keyboard of the present invention is configured in the aforementioned manner.

An operation of the keyboard having the aforementioned configuration is described hereinbelow. When the key top 6 descends, each of the first and second levers 4 and 5 is brought into a nearly horizontal position. Moreover, the cavity 7a of the elastic element 7 is crushed, and the convex portion 7b provided therein descends. The upper sheet 3a is pressed by this convex portion 7b. As a result, the movable contact (not shown) formed on the upper sheet 3a is brought into contact with the stationary contact (not shown) formed on the lower sheet 3b. Consequently, the membrane switch 3 is turned on.

Subsequently, when the pressing of the key top 6 is canceled, the resilient force of the elastic element 7 causes the first and second levers 4 and 5 and the key top 6 to return to the position taken by these elements before the key top 6 is pressed. Moreover, the upper sheet 3a pressed by the convex portion 7b of the elastic element 7 returns to the initial state by the restoring force thereof. Thus, the upper sheet 3a is disengaged from the lower sheet 3b. Consequently, the membrane switch 3 is turned off.

In the first lever 4 of the keyboard of the present invention, the first latching portions 4a are rotatably caught on the base plate 2. Further, the second latching portions 4c are slidably caught on the key top 6. In the second lever 5, the first latching portions 5a are slidably caught on the base plate 2. Furthermore, the second latching portions 5b are rotatably pivotally supported on the key top 6. The first and second levers 4 and 5 are combined with each other by the first and second pivotally supporting portions 4e and 5e in such a manner as to intersect each other.

Thus, the first and second levers 4 and 5 can be turned upwardly and downwardly by using each of the pivotally supporting portions 4e and 5e as a fulcrum. The key top 6 can be held by the first and second levers 4 and 5 in such a way as to freely ascend and descend by simultaneously maintaining the nearly horizontal position thereof.

Although the preferred embodiment of the present invention has been described above, it should be understood that the present invention is not limited thereto and that other modifications will be apparent to those skilled in the art without departing from the spirit of the invention.

The scope of the present invention, therefore, should be determined solely by the appended claims.

## Claims

1. A keyboard comprising:
a key top held on a base plate in such a way as to freely ascend and descend;
an elastic member for upwardly pressing said key top; and
first and second levers for holding said key top so that said key top freely ascends and descends,
wherein said first and second levers are combined with each other by pivotally supporting members, each of which is formed between first and second ends of a corresponding one of said first and second levers, in such a way as to intersect each other,
wherein said first lever has:
a first latching portion for catching said first end thereof on said base plate; and
a second latching portion for engaging said second end thereof on said key top,
wherein said second lever has:
a first latching portion for catching said second end thereof on said base plate; and
a second latching portion for catching said first end thereof with said key top,
wherein said first latching portions of said first and second levers are caught on said base plate, and said second latching portions of said first and second levers are caught on said key top, so that a ratio of a dimension from said first latching portion of said first lever to said pivotally supporting member thereof to a dimension from said pivotally supporting member thereof to said second latching portion thereof is equal to a ratio of a dimension from said first latching portion of said second lever to said pivotally supporting member thereof to a dimension from said pivotally supporting member thereof to said second latching portion thereof, and
wherein said second latching portions of said first and second levers are placed outside said first latching portions of said first and second levers when said key top descends.

2. The keyboard according to claim 1, wherein said first latching portion provided at said first end of said first lever is rotatably caught on said base plate, wherein said second latching portion provided at said first end of said second lever is rotatably caught on said key top, wherein said second latching portion provided at said second end of said first lever is slidably caught on said key top, wherein said first latching portion provided at said second end of said second lever is slidably caught on said base plate, and wherein said pivotally supporting members of said first and second levers are rotatably combined with each other.

3. The keyboard according to claim 1 or 2, wherein each of said first and second latching portions of said first and second levers is formed like a rod in such a way as to protrude therefrom, and wherein a section of each of said first and second latching portions thereof has a nearly elliptic shape, whose dimension in an up-and-down direction is larger than a lateral dimension thereof.
